(19) Europäisches Patentamt
European Patent Office
Office européen des brevets

(11) EP 1 212 842 B1

(12) **EUROPEAN PATENT SPECIFICATION**

(45) Date of publication and mention of the grant of the patent:
**28.04.2004 Bulletin 2004/18**

(21) Application number: **00963466.8**

(22) Date of filing: **14.09.2000**

(51) Int Cl.[7]: **H04B 1/707**, G06F 17/16

(86) International application number:
**PCT/US2000/025241**

(87) International publication number:
**WO 2001/020801 (22.03.2001 Gazette 2001/12)**

# (54) REDUCED COMPUTATION IN JOINT DETECTION

VERMINDERUNG DER RECHENKOMPLEXITÄT IN JOINT DETECTION

TEMPS DE CALCUL REDUIT DANS UN SYSTEME DE DETECTION CONJOINTE

(84) Designated Contracting States:
**AT BE CH CY DE DK ES FI FR GB GR IE IT LI LU MC NL PT SE**

(30) Priority: **14.09.1999 US 153801 P**

(43) Date of publication of application:
**12.06.2002 Bulletin 2002/24**

(73) Proprietor: **INTERDIGITAL TECHNOLOGY CORPORATION**
**Wilmington, DE 19801 (US)**

(72) Inventors:
- **MISRA, Raj, Mani**
  **Freemont, Ca 94538 (US)**
- **ZEIRA, Ariela**
  **Huntington, NY 11743 (US)**

(74) Representative: **Henningsson, Gunnar et al**
**AWAPATENT AB,**
**Box 45086**
**104 30 Stockholm (SE)**

(56) References cited:
- **KARIMI H R ET AL: "A novel and efficient solution to block-based joint-detection using approximate Cholesky factorization" IEEE INTERNATIONAL SYMPOSIUM ON PERSONAL, INDOOR AND MOBILE RADIO COMMUNICATIONS,XX,XX, vol. 3, 1998, pages 1340-1345, XP002112134**
- **MALARD J ET AL: "Efficiency and scalability of two parallel QR factorization algorithms" PROCEEDINGS OF THE SCALABLE HIGH-PERFORMANCE COMPUTING CONFERENCE (CAT. NO.94TH0637-9), PROCEEDINGS OF IEEE SCALABLE HIGH PERFORMANCE COMPUTING CONFERENCE, KNOXVILLE, TN, USA, 23-25 MAY 1994, pages 615-622, XP002157580 1994, Los Alamitos, CA, USA, IEEE Comput. Soc. Press, USA ISBN: 0-8186-5680-8**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### BACKGROUND

The invention generally relates to wireless communication systems. In particular, the invention relates to joint detection of multiple user signals in a wireless communication system.

Figure 1 is an illustration of a wireless communication system 10. The communication system 10 has base stations $12_1$ to $12_5$ which communicate with user equipments (UEs) $14_1$ to $14_3$. Each base station $12_1$ has an associated operational area where it communicates with UEs $14_1$ to $14_3$ in its operational area.

In some communication systems, such as code division multiple access (CDMA) and time division duplex using code division multiple access (TDD/CDMA), multiple communications are sent over the same frequency spectrum. These communications are typically differentiated by their chip code sequences. To more efficiently use the frequency spectrum, TDD/CDMA communication systems use repeating frames divided into time slots for communication. A communication sent in such a system will have one or multiple associated chip codes and time slots assigned to it based on the communication's bandwidth.

Since multiple communications may be sent in the same frequency spectrum and at the same time, a receiver in such a system must distinguish between the multiple communications. One approach to detecting such signals is single user detection. In single user detection, a receiver detects only the communication from a desired transmitter using a code associated with the desired transmitter, and treats signals of other transmitters as interference.

In some situations, it is desirable to be able to detect multiple communications simultaneously in order to improve performance. Detecting multiple communications simultaneously is referred to as joint detection. Some joint detectors use Cholesky decomposition to perform a minimum mean square error (MMSE) detection and zero-forcing block equalizers (ZF-BLEs). These detectors have a high complexity requiring extensive receiver resources.

Karimi H. et al., "A Novel and Efficient solution to Block-Based Joint-detection using Approximate Cholesky Factorization", IEEE International Symposium on Personal, Indoor and Mobile Radio Communications, Vol. 3, 1998, pages 1340-1345 discloses a method for receiving multiple communications. A matrix is formed by convolving channel responses and codes of the received communications. Using an approximate Cholesky factor to decompose the matrix and a received vector, data is estimated.

Accordingly, it is desirable to have alternate approaches to joint detection.

### SUMMARY

A plurality of transmitted data signals are received at a receiver. The receiver measures a channel response associated with the transmitted data signals. A system response is determined. The system response is expanded to be piecewise orthogonal. The received data signals data is retrieved based on in part the expanded system response.

### BRIEF DESCRIPTION OF THE DRAWING(S)

Figure 1 is a wireless communication system.
Figure 2 is a simplified transmitter and a receiver using joint detection.
Figure 3 is an illustration of a communication burst.
Figure 4 is an illustration of reduced computation joint detection.

### DETAILED DESCRIPTION OF THE PREFERRED EMBODIMENT(S)

Figure 2 illustrates a simplified transmitter 26 and receiver 28 using joint detection in a TDD/CDMA communication system. In a typical system, a transmitter 26 is in each UE $14_1$ to $14_3$ and multiple transmitting circuits 26 sending multiple communications are in each base station $12_1$ to $12_5$. A base station $12_1$ will typically require at least one transmitting circuit 26 for each actively communicating UE $14_1$ to $14_3$. The joint detection receiver 28 may be at a base station $12_1$, UEs $14_1$ to $14_3$ or both. The joint detection receiver 28 receives communications from multiple transmitters 26 or transmitting circuits 26.

Each transmitter 26 sends data over a wireless communication channel 30. A data generator 32 in the transmitter 26 generates data to be communicated over a reference channel to a receiver 28. Reference data is assigned to one or multiple codes and/or time slots based on the communications bandwidth requirements. A spreading and training sequence insertion device 34 spreads the reference channel data and makes the spread reference data time-multiplexed with a training sequence in the appropriate assigned time slots and codes. The resulting sequence is

referred to as a communication burst. The communication burst is modulated by a modulator 36 to radio frequency. An antenna 38 radiates the RF signal through the wireless radio channel 30 to an antenna 40 of the receiver 28. The type of modulation used for the transmitted communication can be any of those known to those skilled in the art, such as direct phase shift keying (DPSK) or quadrature phase shift keying (QPSK).

A typical communication burst 16 has a midamble 20, a guard period 18 and two data bursts 22, 24, as shown in Figure 3. The midamble 20 separates the two data bursts 22, 24 and the guard period 18 separates the communication bursts to allow for the difference in arrival times of bursts transmitted from different transmitters. The two data bursts 22, 24 contain the communication burst's data and are typically the same symbol length.

The antenna 40 of the receiver 28 receives various radio frequency signals. The received signals are demodulated by a demodulator 42 to produce a baseband signal. The baseband signal is processed, such as by a channel estimation device 44 and a joint detection device 46, in the time slots and with the appropriate codes assigned to the communication bursts of the corresponding transmitters 26. The channel estimation device 44 uses the training sequence component in the baseband signal to provide channel information, such as channel impulse responses. The channel information is used by the joint detection device 46 to estimate the transmitted data of the received communication bursts as soft symbols.

The joint detection device 46 uses the channel information provided by the channel estimation device 44 and the known spreading codes used by the transmitters 26 to estimate the data of the various received communication bursts. Although joint detection is described in conjunction with a TDD/CDMA communication system, the same approach is applicable to other communication systems, such as CDMA.

One approach to joint detection in a particular time slot in a TDD/CDMA communication system is illustrated in Figure 4. A number of communication bursts are superimposed on each other in the particular time slot, such as K communication bursts. The K bursts may be from K different transmitters. If certain transmitters are using multiple codes in the particular time slot, the K bursts may be from less than K transmitters.

Each data burst 22, 24 of the communication burst 16 has a predefined number of transmitted symbols, such as $N_S$. Each symbol is transmitted using a predetermined number of chips of the spreading code, which is the spreading factor (SF). In a typical TDD communication system, each base station $12_1$ to $12_5$ has an associated scrambling code mixed with its communicated data. The scrambling code distinguishes the base stations from one another. Typically, the scrambling code does not affect the spreading factor. Although the terms spreading code and factor are used hereafter, for systems using scrambling codes, the spreading code for the following is the combined scrambling and spreading codes. Each data burst 22, 24 has $N_s$ x SF chips.

The joint detection device 46 estimates the value that each data burst symbol was originally transmitted. Equation 1 is used to determine the unknown transmitted symbols.

$$\underline{r} = A\,\underline{d} + \underline{n} \qquad \text{Equation 1}$$

In Equation 1, the known received combined chips, $\underline{r}$, is a product of the system response, A, and the unknown transmitted symbols, $\underline{d}$. The term, $\underline{n}$, represents the noise in the wireless radio channel.

For K data bursts, the number of data burst symbols to be recovered is Ns x K. For analysis purposes, the unknown data burst symbols are arranged into a column matrix, $\underline{d}$. The $\underline{d}$ matrix has column blocks, $\underline{d}_1$ to $\underline{d}_{Ns}$, of unknown data symbols. Each data symbol block, $\underline{d}_i$, has the $i^{th}$ unknown transmitted data symbol in each of the K data bursts. As a result, each column block, $\underline{d}_i$, has K unknown transmitted symbols stacked on top of each other. The blocks are also stacked in a column on top of each other, such that $\underline{d}_1$ is on top of $\underline{d}_2$ and so on.

The joint detection device 46 receives a value for each chip as received. Each received chip is a composite of all K communication bursts. For analysis purposes, the composite chips are arranged into a column matrix, $\underline{r}$. The matrix $\underline{r}$ has a value of each composite chip, totaling Ns * SF chips.

A is the system response matrix. The system response matrix, A, is formed by convolving the impulse responses with each communication burst chip code. The convolved result is rearranged to form the system response matrix, A (step 48).

The joint detection device 46 receives the channel impulse response, $\underline{h}_i$, for each $i^{th}$ one of the K communication bursts from the channel estimation device 44. Each $\underline{h}_i$ has a chip length of W. The joint detection device convolves the channel impulse responses with the known spreading codes of the K communication bursts to determine the symbol responses, $\underline{s}_1$ to $\underline{s}_K$, of the K communication bursts. A common support sub-block, S, which is common to all of the symbol responses is of length K x (SF + W - 1).

The A matrix is arranged to have Ns blocks, $B_1$ to $B_{Ns}$. Each block has all of the symbol responses, $\underline{s}_1$ to $\underline{s}_K$, arranged to be multiplied with the corresponding unknown data block in the $\underline{d}$ matrix, $\underline{d}_1$ to $\underline{d}_{Ns}$. For example, $\underline{d}_1$ is multiplied with $B_1$. The symbol responses, $\underline{s}_1$ to $\underline{s}_K$, form a column in each block matrix, $B_i$, with the rest of the block

being padded with zeros. In the first block, $B_1$, the symbol response row starts at the first row. In the second block, the symbol response row is SF rows lower in the block and so on. As a result, each block has a width of K and a height of Ns x SF. Equation 2 illustrates an A block matrix showing the block partitions.

$$A = \left[\begin{array}{cccc|cccc|cccc|c}
\underline{s}_1 & \underline{s}_2 & \cdots & \underline{s}_K & 0 & 0 & \cdots & 0 & 0 & 0 & 0 & 0 & \cdots \\
0 & 0 & 0 & 0 & \vdots & \vdots & \vdots & \vdots & \vdots & \vdots & \vdots & \vdots & \\
 & & & & 0 & 0 & 0 & 0 & & & & & \\
 & & & & \underline{s}_1 & \underline{s}_2 & \cdots & \underline{s}_K & & & & & \\
 & & & & 0 & 0 & 0 & 0 & & & & & \\
\vdots & \vdots & \vdots & \vdots & \vdots & \vdots & \vdots & \vdots & 0 & 0 & 0 & 0 & \cdots \\
 & & & & & & & & \underline{s}_1 & \underline{s}_2 & \cdots & \underline{s}_K & \\
 & & & & & & & & 0 & 0 & 0 & 0 & \\
 & & & & & & & & \vdots & \vdots & \vdots & \vdots & \\
0 & 0 & 0 & 0 & 0 & 0 & 0 & 0 & 0 & 0 & 0 & 0 & \cdots
\end{array}\right] = \begin{bmatrix} B_1 & B_2 & \cdots & B_{N_s} \end{bmatrix}$$

Equation 2

The $\underline{n}$ matrix has a noise value corresponding to each received combined chip, totaling Ns x SF chips. For analysis purposes, the $\underline{n}$ matrix is implicit in the received combined chip matrix, $\underline{r}$.

Using the block notation, Equation 1 can be rewritten as Equation 3.

$$\underline{r} = \begin{bmatrix} B_1 & B_2 & B_3 & \cdots & B_{N_s} \end{bmatrix} \times \begin{bmatrix} \underline{d_1} \\ \underline{d_2} \\ \underline{d_3} \\ \vdots \\ \underline{d_{N_s}} \end{bmatrix} + \underline{n} \quad = \sum_{i=1}^{N_s} B_i \underline{d_i} + \underline{n}$$

Equation 3

Using a noisy version of the $\underline{r}$ matrix, the value for each unknown symbol can be determined by solving the equation. However, a brute force approach to solving Equation 1 requires extensive processing.

To reduce the processing, the system response matrix, A, is repartitioned. Each block, $B_i$, is divided into Ns blocks having a width of K and a height of SF. These new blocks are referred to as $A_1$ to $A_L$ and 0. L is the length of the common support S, as divided by the height of the new blocks, $A_1$ to $A_L$, per Equation 4.

$$L = \left\lceil \frac{SF + W - 1}{SF} \right\rceil$$

Equation 4

Blocks $A_1$ to $A_L$ are determined by the supports, $\underline{s}_1$ to $\underline{s}_K$, and the common support, S. A 0 block is a block having all zeros. A repartitioned matrix for a system having a W of 57, SF of 16 and an L of 5 is shown in Equation 5.

$$A = \begin{bmatrix}
A_1 & 0 & 0 & 0 & 0 & 0 & 0 & \cdots & 0 & 0 & 0 & 0 \\
A_2 & A_1 & 0 & 0 & 0 & 0 & 0 & \cdots & 0 & 0 & 0 & 0 \\
A_3 & A_2 & A_1 & 0 & 0 & 0 & 0 & \cdots & 0 & 0 & 0 & 0 \\
A_4 & A_3 & A_2 & A_1 & 0 & 0 & 0 & \cdots & 0 & 0 & 0 & 0 \\
A_5 & A_4 & A_3 & A_2 & A_1 & 0 & 0 & \cdots & 0 & 0 & 0 & 0 \\
0 & A_5 & A_4 & A_3 & A_2 & A_1 & 0 & \cdots & 0 & 0 & 0 & 0 \\
0 & 0 & A_5 & A_4 & A_3 & A_2 & A_1 & \ddots & 0 & 0 & 0 & 0 \\
0 & 0 & 0 & A_5 & A_4 & A_3 & A_2 & \ddots & 0 & 0 & 0 & 0 \\
0 & 0 & 0 & 0 & A_5 & A_4 & A_3 & \ddots & A_1 & 0 & 0 & 0 \\
0 & 0 & 0 & 0 & 0 & A_5 & A_4 & \ddots & A_2 & A_1 & 0 & 0 \\
0 & 0 & 0 & 0 & 0 & 0 & A_5 & \ddots & A_3 & A_2 & A_1 & 0 \\
0 & 0 & 0 & 0 & 0 & 0 & 0 & \ddots & A_4 & A_3 & A_2 & A_1
\end{bmatrix}$$

Equation 5

To reduce the complexity of the matrix, a piecewise orthogonalization approach is used. Any of the blocks $B_i$ for i being L or greater is non-orthogonal to any of the preceding L blocks and orthogonal to any blocks preceding by more than L. Each 0 in the repartitioned A matrix is an all zero block. As a result to use a piecewise orthogonalization, the A matrix is expanded (step 50).

The A matrix is expanded by padding L-1 zero blocks to the right of each block of the A matrix and shifting each row in the A matrix by its row number less one. To illustrate for the A 1 block in row 2 of Figure 2, four (L-1) zeros are inserted between A2 and A1 in row 2. Additionally, block A1 (as well as A2) is shifted to the right by one column (row 2 -1). As a result, Equation 5 after expansion would become Equation 6.

$$A_{exp} = \begin{bmatrix} A_1 & 0 & 0 & 0 & 0 & 0 & 0 & 0 & 0 & 0 & 0 & \\ 0 & A_2 & 0 & 0 & 0 & A_1 & 0 & 0 & 0 & 0 & 0 & \\ 0 & 0 & A_3 & 0 & 0 & 0 & A_2 & 0 & 0 & 0 & A_1 & \\ 0 & 0 & 0 & A_4 & 0 & 0 & 0 & A_3 & 0 & 0 & 0 & \\ 0 & 0 & 0 & 0 & A_5 & 0 & 0 & 0 & A_4 & 0 & 0 & \\ 0 & 0 & 0 & 0 & 0 & 0 & 0 & 0 & 0 & A_5 & 0 & \cdots \\ 0 & 0 & 0 & 0 & 0 & 0 & 0 & 0 & 0 & 0 & 0 & \\ 0 & 0 & 0 & 0 & 0 & 0 & 0 & 0 & 0 & 0 & 0 & \\ 0 & 0 & 0 & 0 & 0 & 0 & 0 & 0 & 0 & 0 & 0 & \\ 0 & 0 & 0 & 0 & 0 & 0 & 0 & 0 & 0 & 0 & 0 & \\ 0 & 0 & 0 & 0 & 0 & 0 & 0 & 0 & 0 & 0 & 0 & \\ 0 & 0 & 0 & 0 & 0 & 0 & 0 & 0 & 0 & 0 & 0 & \end{bmatrix}$$

Equation 6

To accommodate the expanded A matrix, the $\underline{d}$ matrix must also be expanded, $\underline{d}_{exp}$. Each block, $\underline{d}_1$ to $\underline{d}_{Ns}$, is expanded to a new block, $\underline{d}_{exp1}$ to $\underline{d}_{expNs}$. Each expanded block, $\underline{d}_{exp1}$ to $\underline{d}_{expNs}$, is formed by repeating the original block L times. For example for $\underline{d}_{exp1}$, a first block row would be created having L versions of $\underline{d1}$, stacked one below the other.

As a result, Equation 1 can be rewritten as Equation 7.

$$\underline{r} = A_{exp} \cdot \underline{d_{exp}} + \underline{n}$$
$$= \begin{bmatrix} B_{exp1} & B_{exp2} & B_{exp3} & \cdots & B_{expN_s} \end{bmatrix} \times \begin{bmatrix} \underline{d_{exp1}} \\ \underline{d_{exp2}} \\ \underline{d_{exp3}} \\ \vdots \\ \underline{d_{expN_s}} \end{bmatrix} + \underline{n} = \sum_{i=1}^{N_s} B_{expi} \underline{d_{expi}} + \underline{n},$$

Equation 7

Equation 7 can be rewritten to partition each $B_{expi}$ orthogonally in L partitions, $U_j^{(1)}$, j = 1 to L, as in Equation 8.

$$\underline{r} = A_{exp} \cdot \underline{d}_{exp} + \underline{n} = \sum_{i=1}^{N_s} \left[ U_1^{(i)} \quad U_2^{(i)} \quad \cdots \quad U_L^{(i)} \right] \times \begin{bmatrix} \underline{d}_i \\ \underline{d}_i \\ \underline{d}_i \\ \vdots \\ \underline{d}_i \end{bmatrix} + \underline{n} = \sum_{i=1}^{N_s} \sum_{j=1}^{L} U_j^{(i)} \underline{d}_i = \sum_{i=1}^{N_s} B_i \underline{d}_i + \underline{n}$$

**Equation 8**

To reduce computational complexity, a QR decomposition of the $A_{exp}$ matrix is performed (step 52). Equation 9 illustrates the QR decomposition of $A_{exp}$.

$$A_{exp} = Q_{exp} R_{exp} \qquad \text{Equation 9}$$

Due to the orthogonal partitioning of $A_{exp}$, the QR decomposition of $A_{exp}$ is less complex. The resulting $Q_{exp}$ and $R_{exp}$ matrices are periodic with an initial transient extending over L blocks. Accordingly, $Q_{exp}$ and $R_{exp}$ can be determined by calculating the initial transient and one period of the periodic portion. Furthermore, the periodic portion of the matrices is effectively determined by orthogonalizing $A_1$ to $A_L$. One approach to QR decomposition is a Gramm-Schmidt orthogonalization.

To orthogonalize $A_{exp}$ as in Equation 6, $B_{exp1}$ is othogonalized by independently orthogonalizing each of its orthogonal partitions, $\{U_j^{(i)}\}$, $j=1 \cdots L$ . Each $\{A_j\}$, $j=1 \cdots L$ is independently orthogonalized, and the set is zero-padded appropriately. $\{Q_j\}$ are the orthonormal sets obtained by orthogonalizing $\{U^{(i)}\}$. To determine $B_{exp2}$, its $U_1^{(2)}$ needs to be orthogonalized with respect to only $Q_2$ of $B_{exp1}$ formed previously. $U_2^{(2)}$, $U_3^{(2)}$ and $U_4^{(2)}$ only need to be orthogonalized with respect to only $Q_3$, $Q_4$ and $Q_5$, respectively. $U_5^{(2)}$ needs to be ortogonalized to all previous Qs and its orthogonalized result is simply a shifted version of $Q_5$ obtained from orthogonalizing $B_{exp1}$.

As the orthogonalizing continues, beyond the initial transient, there emerges a periodicity which can be summarized as follows. The result of orthogonalizing $B_{expi}$, $i \geq 6$ can be obtained simply by a periodic extension of the result of orthogonalizing $B_{exp5}$.

The orthogonalization of $B_{exp5}$, is accomplished as follows. Its $Q_5$ is obtained by orthogonalizing $A_5$, and then zero padding. Its $Q_4$ is obtained by orthogonalizing the support of $Q_5$ and $A_4$, [sup($Q_5$) $A_4$], and then zero padding. Since sup($Q_5$) is already an orthogonal set, only $A_4$ needs to be othogonalized with respect to sup($Q_5$) and itself. Its $Q_3$ is obtained by orthogonalizing [sup($Q_5$) sup($Q_4$) $A_3$] and then zero padding. Its $Q_2$ is obtained by orthogonalizing [sup($Q_5$) sup($Q_4$) sup($Q_3$) $A_2$] and then zero padding. Its $Q_1$ is obtained by orthogonalizing [sup($Q_5$) sup($Q_4$) sup($Q_3$) sup($Q_2$) $A_1$] and then zero padding. Apart from the initial transient, the entire $A_{exp}$ can be efficiently orthogonalized, by just orthogonalizing $A_p$ per Equation 10.

$$A_p = [A_5 \ A_4 \ A_3 \ A_2 \ A_1] \qquad \text{Equation 10}$$

By effectively orthogonalizing the periodic portion of $A_{exp}$ by using only $A_p$, computational efficiency is achieved. Using a more compact notation, $Q_i^s$,for sup ($Q_i$) , this orthogonalization of $A_p$ results in the orthonormal matrix, $Q_p$, of Equation 11.

$$Q_p = [Q_5^S \ Q_4^S \ Q_3^S \ Q_2^S \ Q_1^S] \qquad \text{Equation 11}$$

The periodic part of $Q_{exp}$ is per Equation 12.

$$PeriodicPartofQ_{\exp} = \begin{bmatrix} 0 & 0 & 0 & 0 & 0 & 0 & 0 & 0 & 0 & 0 & \cdots \\ \vdots & \vdots & \vdots & \vdots & \vdots & \vdots & \vdots & \vdots & \vdots & \vdots & \\ Q_1^S & 0 & 0 & 0 & 0 & & 0 & 0 & 0 & 0 & \\ 0 & Q_2^S & 0 & 0 & 0 & Q_1^S & 0 & 0 & 0 & 0 & \\ 0 & 0 & Q_3^S & 0 & 0 & 0 & Q_2^S & 0 & 0 & 0 & \\ 0 & 0 & 0 & Q_4^S & 0 & 0 & 0 & Q_3^S & 0 & 0 & \\ 0 & 0 & 0 & 0 & Q_5^S & 0 & 0 & 0 & Q_4^S & 0 & \cdots \\ 0 & 0 & 0 & 0 & 0 & 0 & 0 & 0 & 0 & Q_5^S & \\ 0 & 0 & 0 & 0 & 0 & 0 & 0 & 0 & 0 & 0 & \\ \vdots & \vdots & \vdots & \vdots & \vdots & \vdots & \vdots & \vdots & \vdots & 0 & \\ & & & & & & & & & & \\ 0 & 0 & 0 & 0 & 0 & 0 & 0 & 0 & 0 & 0 & \cdots \end{bmatrix}$$

Equation 12

To constructing the upper triangular matrix $R_{\exp}$, $\langle A_i \rangle_j$ is a block of size $K \times K$ representing the projections of each column of $A_i$ onto all the columns of $Q^s{}_j$. For example, the first column of $\langle A_4 \rangle_5$ represents the projections of the first column of $A_4$ on each of the K columns of $Q_5^S$. Similarly, $\langle A_4 \rangle_4$ represents the projections of the first column of $A_4$ on each of the K columns of $Q_4^S$. However, this block will be upper triangular, because the $k^{th}$ column of $A_4$ belongs to the space spanned by the orthonormal vectors of $Q_5^S$ and the first $k$ vectors of $Q_4^S$. This block is also orthogonal to subsequent vectors in $Q_4^S$, leading to an upper triangular $\langle A_4 \rangle_4$. Any $\langle A_i \rangle_j$ with $i = j$ will be upper triangular. To orthogonalize other blocks, the following results.

The first block of $B_{\exp 5}$, viz., $U_1^{(5)}$ is formed by a linear combination of $\{Q_j^S\}$, $j = 1 \cdots 5$, with coefficients given by $\langle A_1 \rangle_j$, $j = 1 \cdots 5$. The second block, $U_2^{(5)}$, is formed by a linear combination of $\{Q_j^S\}$, $j = 2 \cdots 5$, with coefficients given by $\langle A_2 \rangle_j$, $j = 2 \cdots 5$. The third block, $U_3^{(5)}$, is formed by a linear combination of $\{Q_j^S\}$, $j = 3 \cdots 5$, with coefficients given by $\langle A_2 \rangle_j$, $j = 3 \cdots 5$. The fourth block, $U_4^{(5)}$, is formed by a linear combination of $\{Q_j^S$, $j = 4,5$, with coefficients given by $\langle A_2 \rangle_j$, $j = 4,5$. The fifth block, $U_5^{(5)}$, is formed by $Q_5^S \times \langle A_5 \rangle_5$.

Accordingly, the coefficients in the expansion of subsequent $B_{\exp i}$, $i \geq 6$ are simply periodic extensions of the above. Since the $R_{\exp}$ entries are computed during the orthogonalization of $A_{\exp}$, no additional computations are needed to construct $R_{\exp}$. Disregarding the initial transient, the remainder of $R_{\exp}$ is periodic, and two periods of it are shown in Equation 13.

$$R_{exp} = \left[\begin{array}{cccccccccccc}
 & 0 & 0 & 0 & 0 & 0 & 0 & 0 & 0 & 0 & 0 & \cdots \\
 & \vdots & \vdots & \vdots & \vdots & \vdots & \vdots & \vdots & \vdots & \vdots & & \\
 & 0 & & & & & & & & & & \\
 & \langle A_1 \rangle_5 & & & & & & & & & & \\
 & 0 & & & & & & & & & & \\
 & 0 & & & & & & & & & & \\
 & 0 & & & & & & & & & & \\
 & \langle A_1 \rangle_4 & 0 & 0 & 0 & 0 & 0 & 0 & 0 & 0 & & \\
 & 0 & \langle A_2 \rangle_5 & 0 & 0 & 0 & \langle A_1 \rangle_5 & 0 & 0 & 0 & & \\
 & 0 & 0 & 0 & 0 & 0 & 0 & 0 & 0 & 0 & & \\
 & 0 & 0 & 0 & 0 & 0 & 0 & 0 & 0 & 0 & & \\
 & \langle A_1 \rangle_3 & 0 & 0 & 0 & 0 & 0 & 0 & 0 & 0 & & \\
 & 0 & \langle A_2 \rangle_4 & 0 & 0 & 0 & \langle A_1 \rangle_4 & 0 & 0 & 0 & & \\
 & 0 & 0 & \langle A_3 \rangle_5 & 0 & 0 & 0 & \langle A_2 \rangle_5 & 0 & 0 & & \\
 & 0 & 0 & 0 & 0 & 0 & 0 & 0 & 0 & 0 & & \\
 & \langle A_1 \rangle_2 & 0 & 0 & 0 & 0 & 0 & 0 & 0 & 0 & & \\
0 & 0 & \langle A_2 \rangle_3 & 0 & 0 & 0 & \langle A_1 \rangle_3 & 0 & 0 & 0 & & \\
 & 0 & 0 & \langle A_3 \rangle_4 & 0 & 0 & 0 & \langle A_2 \rangle_4 & 0 & 0 & & \\
 & 0 & 0 & 0 & \langle A_4 \rangle_5 & 0 & 0 & 0 & \langle A_3 \rangle_5 & 0 & & \cdots \\
 & \langle A_1 \rangle_1 & 0 & 0 & 0 & 0 & 0 & 0 & 0 & 0 & & \\
 & 0 & \langle A_2 \rangle_2 & 0 & 0 & 0 & \langle A_1 \rangle_2 & 0 & 0 & 0 & & \\
 & 0 & 0 & \langle A_3 \rangle_3 & 0 & 0 & 0 & \langle A_2 \rangle_3 & 0 & 0 & & \\
 & 0 & 0 & 0 & \langle A_4 \rangle_4 & 0 & 0 & 0 & \langle A_3 \rangle_4 & 0 & & \\
 & 0 & 0 & 0 & 0 & \langle A_5 \rangle_5 & 0 & 0 & 0 & \langle A_4 \rangle_5 & & \\
 & 0 & 0 & 0 & 0 & 0 & \langle A_1 \rangle_1 & 0 & 0 & 0 & & \\
 & 0 & 0 & 0 & 0 & 0 & 0 & \langle A_2 \rangle_2 & 0 & 0 & & \\
 & 0 & 0 & 0 & 0 & 0 & 0 & 0 & \langle A_3 \rangle_3 & 0 & & \\
 & 0 & 0 & 0 & 0 & 0 & 0 & 0 & 0 & \langle A_4 \rangle_4 & & \\
 & 0 & 0 & 0 & 0 & 0 & 0 & 0 & 0 & 0 & \langle A_5 \rangle_5 & \\
 & 0 & 0 & 0 & 0 & 0 & 0 & 0 & 0 & 0 & 0 & \langle A_1 \rangle_1
\end{array}\right]$$

Equation 13

The least squares approach to solving $Q_{exp}$ and $R_{exp}$ is shown in Equation 14.

$$Q_{exp} \cdot R_{exp} \cdot \underline{d}_{exp} = \underline{r} \qquad \text{Equation 14}$$

Equation 14

By pre-multiplying both sides of Equation 14 by the transpose of $Q_{exp}$, $Q^T_{exp}$, and using $Q^T_{exp} \bullet Q_{exp} = I_{LKN_s}$, Equation 14 becomes Equation 15.

$$R_{exp} \cdot \underline{d}_{exp} = Q^T_{exp} \underline{r} \qquad \text{Equation 15}$$

Equation 15 represents a triangular system whose solution also solves the LS problem of Equation 14.

Due to the expansion, the number of unknowns is increased by a factor of L. Since the unknowns are repeated by a factor of L, to reduce the complexity, the repeated unknowns can be collected to collapse the system. $R_{exp}$ is collapsed using L coefficient blocks, $CF_1$ to $CF_L$, each having a width and a height of K. For a system having an L of 5, $CF_1$ to $CF_5$ can be determined as in Equation 16.

$$CF_1 = \langle A_1 \rangle_1 + \langle A_2 \rangle_2 + \langle A_3 \rangle_3 + \langle A_4 \rangle_4 + \langle A_5 \rangle_5$$

$$CF_2 = \langle A_1 \rangle_2 + \langle A_2 \rangle_3 + \langle A_3 \rangle_4 + \langle A_4 \rangle_5$$

$$CF_3 = \langle A_1 \rangle_3 + \langle A_2 \rangle_4 + \langle A_3 \rangle_5$$

$$CF_4 = \langle A_1 \rangle_4 + \langle A_2 \rangle_5$$

$$CF_5 = \langle A_1 \rangle_5 \qquad \text{Equation 16}$$

Collapsing $R_{exp}$ using the coefficient blocks produces a Cholesky like factor, $\hat{G}$ (step 54). By performing analogous operations on the right hand side of Equation 15 results in a banded upper triangular system of height and width of K x Ns as in Equation 17.

$$\begin{bmatrix} Tr_1 & Tr_2 & Tr_3 & Tr_4 & CF_5 & 0 & 0 & 0 & 0 & 0 & \cdots \\ 0 & Tr_1 & Tr_2 & CF_3 & CF_4 & CF_5 & 0 & 0 & 0 & 0 & \cdots \\ 0 & 0 & CF_1 & CF_2 & CF_3 & CF_4 & CF_5 & 0 & 0 & 0 & \cdots \\ 0 & 0 & 0 & CF_1 & CF_2 & CF_3 & CF_4 & CF_5 & 0 & 0 & \cdots \\ 0 & 0 & 0 & 0 & CF_1 & CF_2 & CF_3 & CF_4 & CF_5 & 0 & \cdots \\ \vdots & \vdots & \vdots & \vdots & 0 & \ddots & \ddots & \ddots & \ddots & \ddots & 0 \end{bmatrix} \times \begin{bmatrix} \underline{d_1} \\ \underline{d_2} \\ \underline{d_3} \\ \vdots \\ \underline{d_{N_s}} \end{bmatrix} = \underline{\hat{r}}$$

**Equation 17**

$Tr_1$ to $Tr_4$ are the transient terms and $\hat{r}$. By solving the upper triangle via back substitution, Equation 17 can be solved to determine $\underline{d}$ (step 56). As a result, the transmitted data symbols of the K data bursts is determined.

Using the piecewise orthogonalization and QR decomposition, the complexity of solving the least square problem when compared with a banded Cholesky decomposition is reduced by a factor of 6.5.

## Claims

1. A method for use at a receiver of retrieving data from a plurality of data signals transmitted in a communication system, the method comprising:

receiving the plurality of transmitted data signals at the receiver and measuring a channel response associated with the transmitted data signals;
determining a system response based on in part the channel response (48);

the method **characterized by**:

expanding the system response to be piecewise orthogonal (50); and
retrieving data from the received data signals based on in part the expanded system response (52, 54, 56).

**2.** The method of claim 1 adapted for determining the system response by convolving the chip codes associated to the transmitted data signals with the channel response.

**3.** The method of claim 1 wherein the system response is a system response matrix, further comprising dividing the system response matrix into blocks of columns prior to the expanding.

**4.** The method of claim 3 wherein the expanding is by padding zeros in the column blocks to such that each block is orthogonal.

**5.** The method of claim 3 wherein SF is a spreading factor associated with the data signals and W is a chip length associated with the channel response and the blocks contain L columns, where L is

$$\left\lceil L = \frac{SF + W - 1}{SF} \right\rceil.$$

**6.** The method of claim 1 further comprising QR decomposing the expanded system response (52).

**7.** The method of claim 6 wherein the QR decomposing is by Gramm-Schmitt orthogonalization.

**8.** The method of claim 3 further comprising replacing elements of a column block with sub-blocks prior to the expanding.

**9.** The method of claim 8 wherein in the sub-blocks have a same width as the column blocks and have a height associated with a length of a symbol response and a support of the symbol response.

**10.** The method of claim 8 further comprising QR decomposing the system response matrix and orthogonalizing a periodic portion of a Q matrix is by orthogonalizing the sub-blocks.

**11.** The method of claim 10 further comprising orthogonalizing a periodic portion of an R matrix based on in part the orthogonalized sub-blocks associated with the Q matrix.

**12.** The method of claim 6 wherein the QR decomposing results in a Q matrix and an R matrix, each having an initial transient and a periodic portion.

**13.** The method of claim 12 further comprising collapsing the R matrix by replacing elements in the R matrix with coefficient blocks.

**14.** The method of claim 13 wherein the R matrix with coefficient blocks is a Cholesky-like factor (54).

**15.** A joint detection device for use in a receiver receiving a plurality of data signals, the joint detection device comprising:

means (46) for determining a system response based on in part a measured channel reponse;

**characterized in that** the joint detection device comprises:

means (46) for expanding the system response to be piecewise orthogonal; and

means for retrieving data from the received data signals based on in part the expanded system response.

**16.** A receiver for receiving a plurality of transmitted data signals in a communication system, the receiver comprising:

an antenna (40) for receiving the transmitted data signals;
a channel estimation device (44) for determining a channel response for each received data signal;

**characterized in that** the receiver comprises:

a joint detection device (46) as claimed in claim 15 having an input configured to receive the channel responses and the received data signals.

**17.** The receiver of claim 16 for use in a time division duplex using code division multiple access communication system.

**18.** The receiver of claim 17 adapted for receiving transmitted data signals each having an associated chip code and transmitted in a shared frequency spectrum, further adapted for determining the system response by convolving the associated chip codes with the channel response.

**19.** The receiver of claim 17 wherein the channel estimation device (44) measures the channel response using a received training sequence associated with the data signals.

**20.** The receiver of claim 16 wherein the system response is a system response matrix, further comprising dividing the system response matrix into blocks of columns prior to the expanding.

**21.** The receiver of claim 20 wherein the expanding is by padding zeros in the column blocks such that each column block is orthogonal.

**22.** The receiver of claim 20 wherein SF is a spreading factor associated with the data signals and W is a chip length associated with the channel response and the blocks contain L columns, where L is

$$\left\lceil L = \frac{SF + W - 1}{SF} \right\rceil.$$

**Patentansprüche**

**1.** Zur Verwendung bei einem Empfänger vorgesehenes Verfahren zur Wiedergewinnung von Daten aus mehreren in einem Übertragungssystem gesendeten Datensignalen, mit den Schritten:

Empfangen der mehreren gesendeten Signale am Empfänger und Messen einer zu den gesendeten Datensignalen gehörigen Kanalantwort;
Bestimmen einer Systemantwort, zum Teil auf der Grundlage der Kanalantwort (48);

**gekennzeichnet durch**:

Erweitern der Systemantwort, um sie stückweise orthogonal (50) zu machen; und
Wiedergewinnen von Daten aus den empfangenen Datensignalen, zum Teil auf der Grundlage der erweiterten Systemantworten, (52, 54, 56).

**2.** Verfahren nach Anspruch 1, angepaßt zum Bestimmen der Systemantwort durch Konvolvieren der den gesendeten Datensignalen zugehörigen Chipcodes mit der Kanalantwort.

**3.** Verfahren nach Anspruch 1, wobei es sich bei der Systemantwort um eine Systemantwortmatrix handelt, ferner aufweisend das Aufteilen der Systemantwortmatrix in Spaltenblöcke, bevor die Systemantwortmatrix erweitert wird.

**4.** Verfahren nach Anspruch 3, wobei das Erweitern dadurch erfolgt, daß die Spaltenblöcke mit Nullen aufgefüllt werden, so daß jeder Block orthogonal ist.

**5.** Verfahren nach Anspruch 3, wobei SF ein zu den Datensignalen gehöriger Spreizfaktor ist und W eine zur Kanalantwort gehörige Chiplänge ist, und die Blöcke L Spalten enthalten, wobei L gleich

$$L = \left\lceil \frac{SF + W - 1}{SF} \right\rceil$$

ist.

**6.** Verfahren nach Anspruch 1, ferner mit dem Schritt der QR-Zerlegung der erweiterten Systemantwort (52).

**7.** Verfahren nach Anspruch 6, wobei die QR-Zerlegung durch Orthogonalisierung nach Gramm-Schmitt erfolgt.

**8.** Verfahren nach Anspruch 3, ferner mit dem Schritt des Austauschens von Elementen eines Spaltenblocks gegen Unterblöcke vor dem Schritt des Erweiterns.

**9.** Verfahren nach Anspruch 8, wobei die Unterblöcke dieselbe Breite wie die Spaltenblöcke haben und eine Höhe haben, die mit einer Länge einer Symbolantwort und einer Unterstützung der Symbolantwort zusammenhängt.

**10.** Verfahren nach Anspruch 8, ferner aufweisend die QR-Zerlegung der Systemantwortmatrix und das Orthogonalisieren eines periodischen Abschnitts einer Q-Matrix durch Orthogonalisiern der Unterblöcke.

**11.** Verfahren nach Anspruch 10, ferner aufweisend das Orthogonalisieren eines periodischen Abschnitts einer R-Matrix, zum Teil auf der Grundlage der zur Q-Matrix gehörigen orthogonalisierten Unterblöcke.

**12.** Verfahren nach Anspruch 6, wobei sich aus der Q-Zerlegung eine Q-Matrix und eine R-Matrix ergeben, jeweils mit einem anfänglichen transienten und einem periodischen Abschnitt.

**13.** Verfahren nach Anspruch 12, ferner aufweisend den Schritt des Kollabierens der R-Matrix durch Austauschen von Elementen in der R-Matrix gegen Koeffizientenblöcke.

**14.** Verfahren nach Anspruch 13, wobei die R-Matrix mit Koeffizientenblöcken ein Cholesky-artiger Faktor (54) ist.

**15.** Eine Joint-Detection-Vorrichtung zur Verwendung in einem Empfänger, der mehrere Datensignale empfängt, wobei die Joint-Detection-Vorrichtung aufweist:

eine Einrichtung (46) zum Bestimmen einer Systemantwort, zum Teil auf der Grundlage einer gemessenen Kanalantwort;

**dadurch gekennzeichnet, daß** die Joint-Detection-Vorrichtung aufweist:

eine Einrichtung (46) zum Erweitern der Systemantwort, um sie stückweise orthogonal zu machen; und
eine Einrichtung zum Wiedergewinnen von Daten aus den empfangenen Datensignalen, zum Teil auf der Grundlage der erweiterten Systemantwort.

**16.** Empfänger zum Empfangen mehrerer gesendetor Datensignale in einem Übertragungssystem, wobei der Empfänger aufweist;

eine Antenne (40) zum Empfangen der gesendeten Datensignale;
eine Kanalschätzvorrichtung (Channel Estimator) (44) zum Bestimmen einer Kanalantwort für jedes empfangene Datensignal;

**dadurch gekennzeichnet, daß** der Empfänger aufweist:

eine Joint-Detection-Vorrichtung (46) nach Anspruch 15 mit einem Eingang, der zum Empfang der Kanalantworten und der empfangenen Datensignale konfiguriert ist.

**17.** Empfänger nach Anspruch 16 zur Verwendung in einem TDD-(Time-Division-Duplex)-System mit CDMA-(Code-Division-Multiple-Access)-Übertragung.

**18.** Empfänger nach Anspruch 17, angepaßt zum Empfangen der gesendeten Datensignale, wobei jedes einen zugehörigen Chipcode aufweist und in einem gemeinsamen Frequenzspektrum gesendet wird, ferner angepaßt zum Bestimmen der Systemantwort durch Konvolvieren der zugehörigen Chipcodes mit der Kanalantwort.

**19.** Empfänger nach Anspruch 17, wobei die Kanalschätzvorrichtung (44) die Kanalantwort unter Verwendung einer zu den Datensignalen gehörigen empfangenen Trainingssequenz mißt.

**20.** Empfänger nach Anspruch 16, wobei die Systomantwort eine Systemantwortmatrix ist, ferner aufweisend das Aufteilen der Systemantwortmatrix in Spaltenblöcke, bevor die Systemantwortmatrix erweitert wird.

**21.** Empfänger nach Anspruch 20, wobei das Erweitern durch Auffüllen der Spaltenblöcke mit Nullen erfolgt, so daß jeder Spaltenblock orthogonal ist

**22.** Empfänger nach Anspruch 20, wobei SF ein zu den Datensignalen gehöriger Spreizfaltor ist und W eine zur Kanalantwort gehörige Chiplänge ist, und die Blöcke L Spalten enthalten, wobei L gleich

$$L = \left\lceil \frac{SF + W - 1}{SF} \right\rceil$$

ist.

## Revendications

**1.** Procédé destiné à être utilisé au niveau d'un récepteur afin de récupérer des données dans une pluralité de signaux de données émises dans un système de communication, ce procédé comprenant :

la réception de la pluralité de signaux de données émis au niveau du récepteur et la mesure d'une réponse de voie associée aux signaux de données émis ;

la détermination d'une réponse de système basée en partie sur la réponse de voie (48) ;

le procédé étant **caractérisé par** :

l'élargissement de la réponse de système pour qu'elle soit orthogonale bribe par bribe (50) ; et

la récupération de données dans les signaux de données reçus basée en partie sur la réponse élargie du système (52, 54, 56).

**2.** Procédé selon la revendication 1, adapté pour déterminer la réponse de système en réalisant la convolution des codes de bribe associés aux signaux de données émises et de la réponse de voie

**3.** Procédé selon la revendication 1, dans lequel la réponse de système est une matrice de réponse de système, et comprend en outre la division de la matrice de réponse de système en blocs de colonnes avant son élargissement.

**4.** Procédé selon la revendication 3 ; dans lequel l'élargissement se fait par bourrage de zéros dans les blocs de colonnes de telle sorte que chaque bloc est orthogonal.

**5.** Procédé selon la revendication 3, dans lequel SF est un coefficient d'étalement associée aux signaux de données et W est une longueur de bribe associé à la réponse de voie et les blocs contiennent L colonnes, où L est égal à

$$\left[ L = \frac{SF + W - 1}{SF} \right]$$

**6.** Procédé selon la revendication 1, comprenant en outre une décomposition QR de la réponse de système élargie (52).

**7.** Procédé selon la revendication 6, dans lequel la décomposition QR se fait par l'orthogonalisation de Gramm-Schmitt.

**8.** Procédé selon la revendication 3, comprenant en outre le remplacement d'éléments d'un bloc de colonnes par des sous-blocs, avant l'élargissement.

**9.** Procédé selon la revendication 8, dans lequel les sous-blocs ont la même largeur que les blocs de colonne et ont une hauteur associée à une longueur d'une réponse de symbole et un support de la réponse de symbole.

**10.** Procédé selon la revendication 8, comprenant en outre une décomposition QR de la matrice de réponse du système et l'orthogonalisation d'une portion périodique d'une matrice Q se fait par l'orthogonalisation des sous-blocs.

**11.** Procédé selon la revendication 10, comprenant en outre l'orthogonalisation d'une portion périodique d'une matrice R basée en partie sur les sous-blocs orthogonalisés associés à la matrice Q.

**12.** Procédé selon la revendication 6, dans lequel la décomposition QR résulte en la formation d'une matrice Q et d'une matrice R, chacune ayant une portion périodique et une portion initiale transitoire.

**13.** Procédé selon la revendication 12, comprenant en outre l'effondrement de la matrice R en remplaçant les éléments de la matrice R par des blocs de coefficient.

**14.** Procédé selon la revendication 13, dans lequel la matrice R ayant des blocs de coefficient est un facteur semblable au facteur de Cholesky (54).

**15.** Dispositif de détection commune destiné à être utilisé dans un récepteur recevant une pluralité de signaux de données, ce dispositif de détection commune comprenant :

un moyen (46) de détermination d'une réponse de système basée en partie sur une réponse de voie mesurée ;

**caractérisé en ce que** le dispositif de détection commune comprend :

un moyen (46) d'élargissement de la réponse de système pour qu'elle soit orthogonale, bribe par bribe ; et

un moyen de récupération de données dans les signaux de données reçus basé en partie sur la réponse de système élargie.

**16.** Récepteur permettant de recevoir une pluralité de signaux de données émis dans un système de communication, ce récepteur comprenant :

une antenne (40) permettant de recevoir les signaux de données émis ;

un dispositif d'estimation de voie (44) permettant de déterminer une réponse de voie pour chaque signal de données reçu ;

**caractérisé en ce que** le récepteur comprend :

un dispositif de détection commune (46) selon la revendication 15 ayant une entrée configurée pour recevoir les réponses de voie et les signaux de données reçus.

**17.** Récepteur selon la revendication 16 destiné à être utilisé dans un duplex à répartition dans le temps utilisant un

système de communication à accès multiple à répartition par code.

**18.** Récepteur selon la revendication 17, adapté pour recevoir des signaux de données émis ayant chacun un code associé et émis dans un spectre à fréquence partagée, adapté en outre pour déterminer la réponse de système en réalisant la convolution des codes de bribe associés avec la réponse de voie.

**19.** Récepteur selon la revendication 17, dans lequel le dispositif d'estimation de voie (44) mesure la réponse de voie en utilisant une séquence d'apprentissage reçue associée aux signaux de données.

**20.** Récepteur selon la revendication 16, dans lequel la réponse de système est une matrice de réponse de système, comprenant en outre la division de la matrice de réponse du système en blocs de colonnes avant l'élargissement.

**21.** Récepteur selon la revendication 20, dans lequel l'élargissement se fait par bourrage de zéros dans les blocs de colonnes de telle sorte que chaque bloc de colonne est orthogonal.

**22.** Récepteur selon la revendication 20, dans lequel SF est un coefficient d'étalement associé aux signaux de données et W est une longueur de bribe associée à la réponse de voie et les blocs contiennent L colonnes, où L est égal à

$$\left[ L = \frac{SF + W - 1}{SF} \right]$$

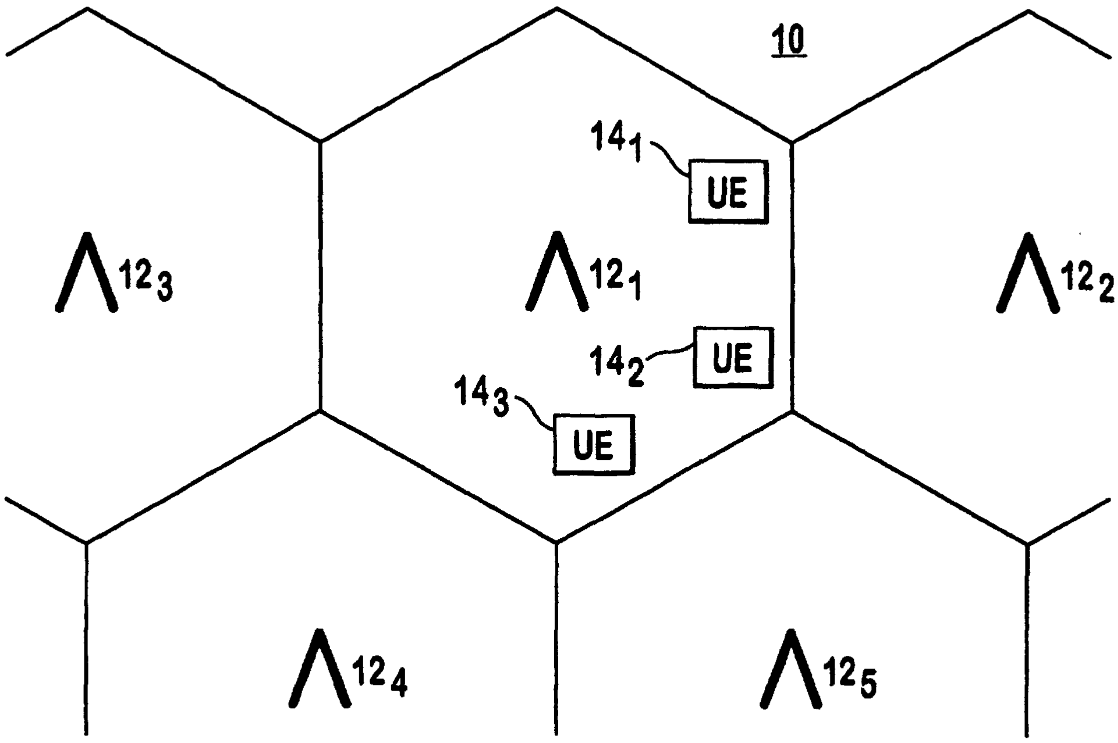
10
$14_1$
UE
$12_3$
$12_1$
$12_2$
$14_2$
UE
$14_3$
UE
$12_4$
$12_5$

FIG. 1

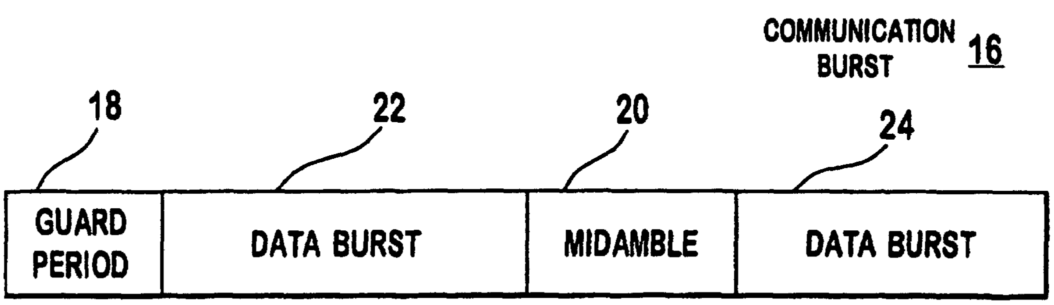
COMMUNICATION BURST 16
18
22
20
24
GUARD PERIOD
DATA BURST
MIDAMBLE
DATA BURST

FIG. 3

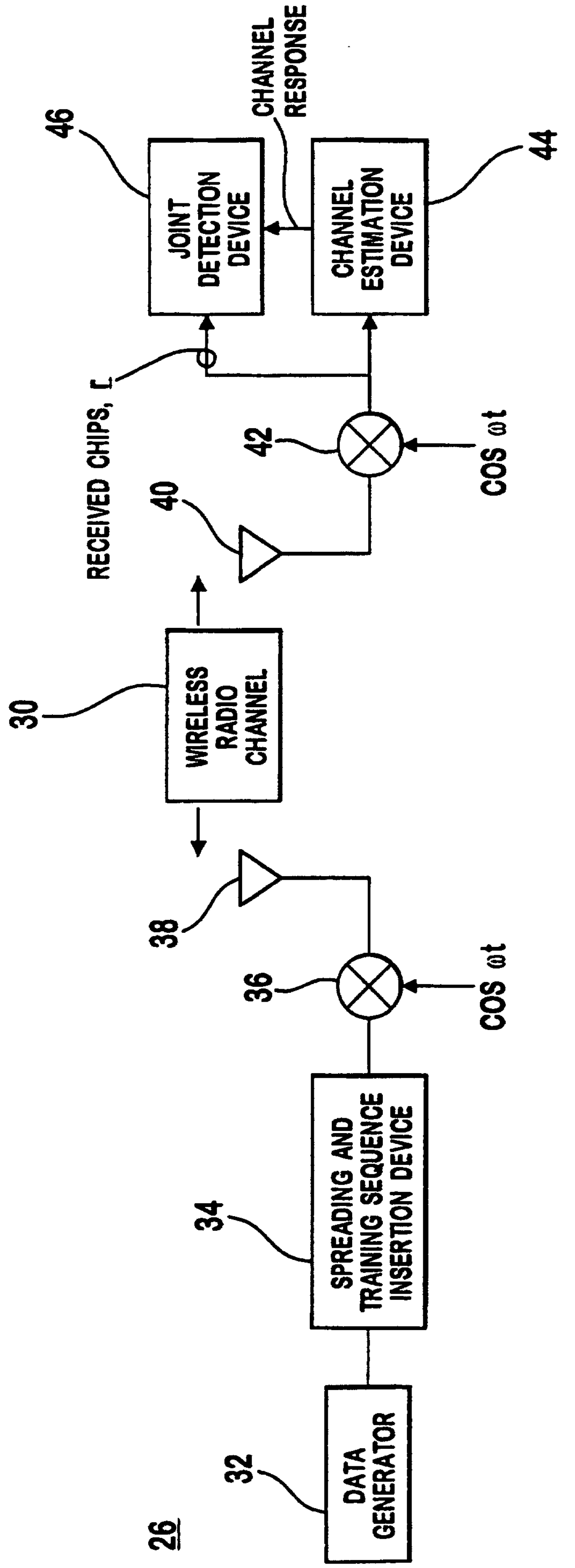
26
DATA GENERATOR
32
SPREADING AND TRAINING SEQUENCE INSERTION DEVICE
34
36
COS ωt
38
WIRELESS RADIO CHANNEL
30
40
42
COS ωt
RECEIVED CHIPS, r
CHANNEL ESTIMATION DEVICE
44
JOINT DETECTION DEVICE
46
CHANNEL RESPONSE

FIG. 2

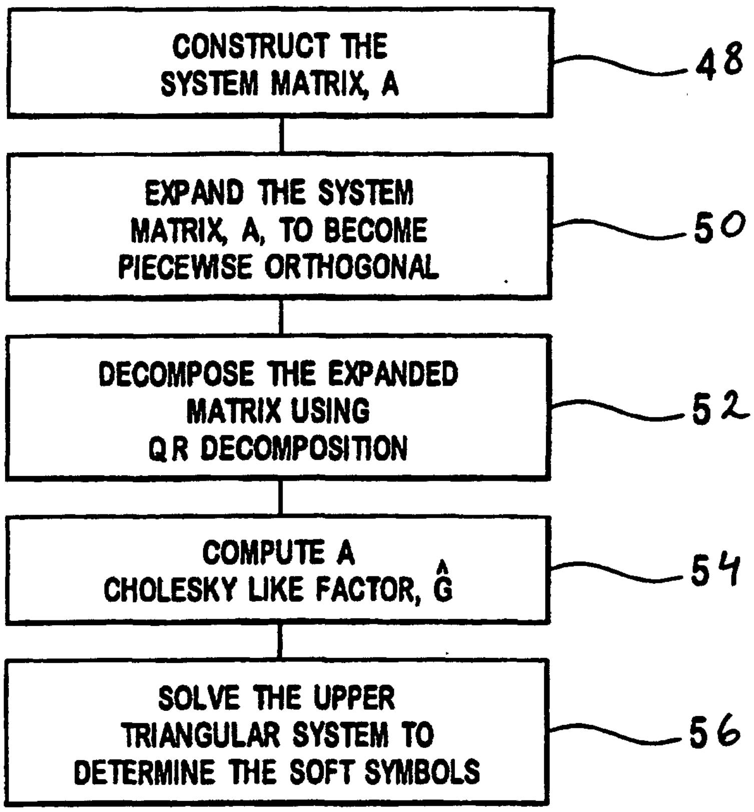
CONSTRUCT THE SYSTEM MATRIX, A
48
EXPAND THE SYSTEM MATRIX, A, TO BECOME PIECEWISE ORTHOGONAL
50
DECOMPOSE THE EXPANDED MATRIX USING QR DECOMPOSITION
52
COMPUTE A CHOLESKY LIKE FACTOR, Ĝ
54
SOLVE THE UPPER TRIANGULAR SYSTEM TO DETERMINE THE SOFT SYMBOLS
56

FIG. 4